# EUROPEAN PATENT SPECIFICATION

(11) **EP 2 680 988 B1**
(45) Date of publication and mention of the grant of the patent: **03.05.2017**
(21) Application number: 12707087.8
(22) Date of filing: 01.03.2012
(51) Int. Cl.: B21D 43/24, B65H 3/08, B65G 59/06, B21D 51/44, B65G 59/10

(54) **METHOD FOR SEPARATING DISCS OF METAL FROM A STACK OF DISCS**
VERFAHREN ZUM TRENNEN VON METALLSCHEIBEN AUS EINEM SCHEIBENSTAPEL
PROCÉDÉ DE SÉPARATION DE DISQUES DE MÉTAL D'UNE PILE DE DISQUES

(30) Priority: 04.03.2011 EP 11156936
(43) Date of publication of application: 08.01.2014
(73) Proprietor: Crown Packaging Technology, Inc., Alsip, IL 60803-2599 (US)
(72) Inventor: WOULDS, William, Shipley West Yorkshire BD17 7AY (GB)
(74) Representative: Lind, Robert
(86) International application number: PCT/EP2012/053519
(87) International publication number: WO 2012/119915

(56) References cited:
- EP-A2- 1 223 131
- FR-A1- 2 687 652
- US-A- 1 750 391
- US-A- 2 453 545
- US-A- 3 940 017

## Description

### Technical Field

This invention relates to an assembly and method for separating metal discs for use in the can making industry, for example for feeding individual discs to a machine which forms a disc into a cup shape, known as a "cupper" or cupping press or to a bodymaker for drawing hollow articles such as metal containers or cans. Alternatively the cupping press may be a press for forming any shallow metal cap or closure.

### Background Art

In the canmaking industry, metal such as steel or aluminium is supplied from the manufacturer as a coil, typically of lubricated metal. The metal requirements are set by the manufacturer, with standard parameters such as metal type, surface roughness and friction coefficient at boundary lubrication being standard in the trade. The coil manufacturer will, in general, supply pre-lubricated coil with a set amount of lube on the metal. The coil then passes through a wet lubricator, which is almost as wide as the cupping press, before entering the press itself.

For the purpose of manufacture, a cupper is fed with a sheet of steel or aluminium from a large roll or coil. The cupper then cuts discs (up to 14 at a time) out of the sheet metal and forms each of the discs into a cup in one operation.

EP 10162130 (CROWN PACKAGING TECHNOLOGY, INC) 06.05.2010 (unpublished) refers to a type of existing apparatus for the formation of a "two piece" container (i.e. a one piece can body with integral side wall and base, and a separate end component) in which a cupping press is first fed with a coil of metal and then punches discs out of the metal to be made into cups. The flat circular blanks or discs of metal are each drawn through one or more drawing dies in the cupping press to form the shallow cups. The cups are subsequently transferred to a bodymaker for conversion into the finished can body.

As noted in EP 10162130 , the cupping press is a large and extremely expensive machine (currently around £1.5 million). The tooling for it is also very expensive. The material left from the coil once the discs have been cut from it is scrap. The scrap then has to be collected via a vacuum chute system and transferred to the bailer, which is again an expensive item to run. All the coil handling and lubricating equipment also cost money and takes up a large footprint (floor space). Finally, there is a massive amount of cup conveying equipment, which transfers the cups from the cupper to the bodymaker. If the cupper or any of the related equipment stops then the whole line shuts down and total production is lost.

In the invention of unpublished patent application EP 10162130 discs are stacked ready for direct supply into a can bodymaker. A vacuum feed is also referred to in that application for separating the discs but no further details of this separator device are given.

It is known from FR 9202212 B (CMB PACKAGING SA) to feed the top sheet from a stack of metal sheets by applying suction cups to the rear end of the sheet. The sheet is then displaced forwards over a front guide into engagement with a traction mechanism. The device also includes a means of raising and lowering the gripped sheet and a means of blowing air to create an air cushion under each sheet. This is noted as being particularly useful in the case of lubricated metal sheets, which tend to adhere to adjacent sheets and are not always raised sufficiently to strip one sheet from another sheet below. This patent is another example of the extensive equipment requirements for handling a stack of large sheets of metal.

It is a first object of this invention to provide a separator and method of separating metal discs bought pre-cut from out of the lubricated coil. As in EP 10162130 the purchase of pre-cut discs avoids the expense of buying and maintaining a large cupper of the sort, which cuts the discs as well as forming cups. The purchase of pre-cut discs also reduces or avoids many of the associated costs such as all the coil handling equipment (including the wet lubricator) and scrap collection equipment.

In known cupping presses, sheet metal is supplied from the wet lubricator with a wet lube applied for the cupping process. This metal sheet can be handled immediately as the wet lube does not need any drying time before cupping. Nonetheless, it is known for discs in the cupping press to have adhered to each other, which leads to multiple feeds of the discs and, as a result, subsequent risk of shut down etc. as described above. It is the main object of this invention to provide a solution both to the separation of each individual disc and the extraction of that disc from a stack of lubricated discs.

US 1 750 391 A discloses a can-end-feeding mechanism and a method for extracting a can-end from the bottom of a stack of can-ends according to the preamble of claim 1.

### Summary of invention

According to the present invention, there is provided a method of extracting a single disc from the bottom of a stack of pre-lubricated discs according to claim 1.

Preferably, in this method, the reciprocating step comprises lifting the extractor shaft up and down through a guide block and moving a plate fixed to the shaft and sprung stops on the plate to a stop position at the end of the up stroke when the stops contact the stack of discs; the retaining and sliding steps comprise retaining a vacuum spindle within both the plate and the extractor shaft, the spindle having a spring at its lower end; and allowing the spindle to slide up and down against the bias of the spring; the step of switching on a vacuum supply comprises switching on the vacuum supply to a chamber in the guide block when a slot in the extractor shaft passes a vacuum supply port thereby switching vacuum through the centre of the vacuum spindle and into the vacuum pad on the up stroke, and gripping the bottom disc of the stack; and the step of switching off the vacuum supply comprises switching off the vacuum supply when the slot in the extractor shaft passes the vacuum supply port on the down stroke.

### Brief description of drawings

The invention will now be described with reference to the drawings, in which:
Figure 1 is a schematic side section of an apparatus suitable for carrying out the method according to the invention, showing separator and extractor; Figure 2 is a plan view of the separator ring; Figure 3 is a side sectional view along X-X of figure 2; and
Figure 4 is a general perspective view of a disc separator and disc feed.

### Description of embodiments

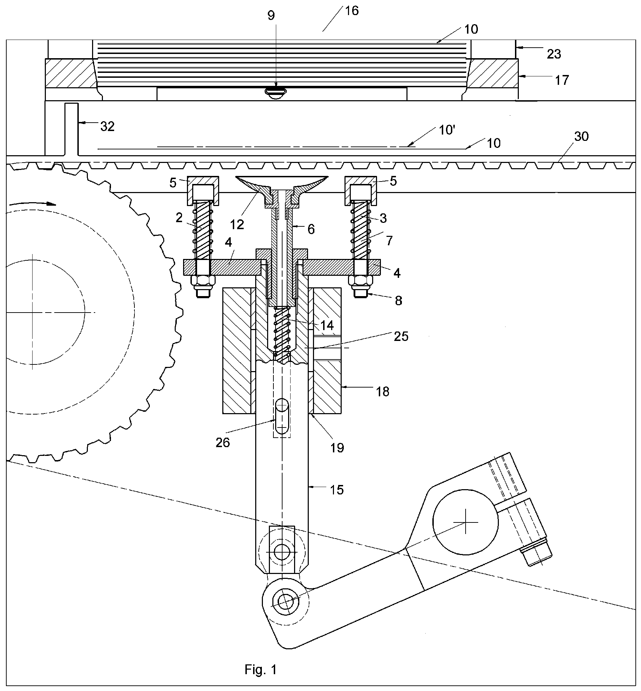

Figure 1 shows the assembly in a disc release position. In figure 1, the discs 10 are stacked above a suction pad or vacuum cup 12, which is biased towards the discs by a spindle 6. Plate 4 is fixed to an extractor shaft 15 by a manufactured screw which locks the plate 4 in position, retains the vacuum spindle 6 and spring 14 and also includes a bush, which allows the spindle to slide up and down against the spring 14.

There are two extractor shafts 15 (only one shown in figure 1), which move up and down and are positioned on the edge of the disc. The extractor shaft 15 is shown at the bottom of its stroke, for releasing a disc 10.

By positioning the extractor shafts close to the edge of the disc, it is easier to separate the bottom disc from the rest of the disc. The shafts are guided by a pair of bushes 19 in a guide block 18, with a chamber between the bushes 19. The shafts protrude below this block to connect to a link and lever mechanism.

A port 25 in the guide block 18 connects a vacuum supply to the chamber between the bushes 19. A slot 26 in the shaft passes across this port as the extractor shafts 15 move up and down turning the vacuum on and off to release a disc 10 at the bottom of the stroke.

A hole through the centre of the vacuum spindle 6 allows the vacuum into the suction cup 12, which is therefore also switched on and off as the shafts move up and down. The two stops 5 with springs 2, 3 are held in place by rods 7, which are threaded at the bottom. The nuts 8 on the rod on the lower side of plate 4 allow the rods 7 to be adjusted in height. The stops 5 are set higher than the vacuum cup 12 so that on the up stroke they stop when they hit the bottom of the stack 10 whilst the vacuum spindle and cup continue up to grip the bottom disc and separate it from the stack on the down stroke.

On the down stroke, the vacuum cup 12 pulls the disc down between the two stops forming a small bow in the disc which breaks the vacuum between the bottom disc and the one above it. An air blow nozzle 9 on both sides of the stack blows air into this bow to help accelerate the separation. The vacuum on/off position of the disc is shown dotted as 10' in figure 1. The assembly continues down and the vacuum is switched off, as the slot 26 passes below the port 25, releasing the disc onto the flighted belt 30 at the bottom of the stroke.

Also as shown in figure 1, discs 10 are stacked between guide rods 23, which form a hopper. After the discs have been cut, and because they are cut from a coil, they form a natural bow of up to 3 mm. The discs can be loaded either way up into the hopper. As all the discs have a bow, the bottom discs' surface position can vary up to 6 mm. As a result, the extractor assembly has all active components mounted on springs.

The assembly is positioned to extract a disc loaded with the bow upwards. If the stack changes to bow downwards (up to 6 mm lower) the springs will compensate, allowing the stops and vacuum spindle to be pushed further down, yet retaining their set position on the bottom disc as the extractor moves down. The position of spring 14 at the base of vacuum spindle 6 is not critical but it must be flexible.

A separator ring is shown generally at 17 and a pair of sensors detects double discs, i.e. un-separated, discs when extracted from the separator ring centre. There are four slots cut in the bottom of the separator ring to form four segments 20.

When the discs are stacked they are not all exactly in line, which makes the total stack slightly wider than a single disc. The guide rods have to accommodate this. The taper on the top section of the separator ring 17 also guides the discs onto the segments.

If the segments are flat on the top section, the friction caused by the weight of the stack is too great for the vacuum to pull the discs across it. To overcome this friction, the segments have a top section with a radius. The bottom disc is then only held at the very edge against this radius. When the vacuum cup pulls this down, the disc slides around the radius and at no point is trapped against a flat surface.

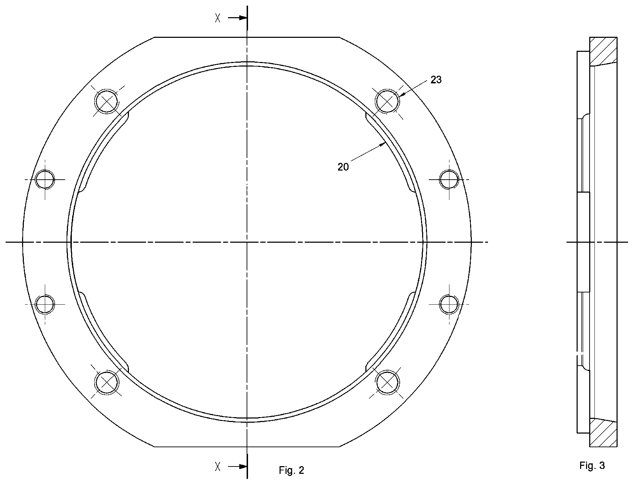

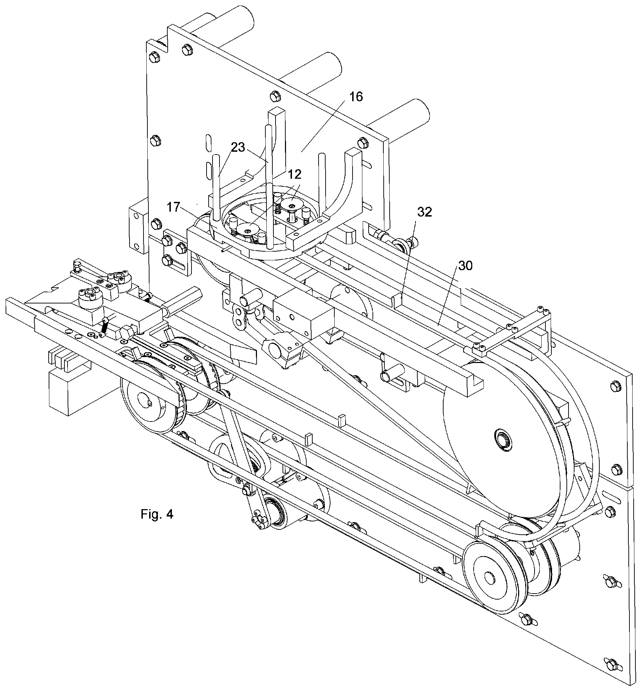

Figures 2 and 3 give more detail of one example of the separator "ring" 17. Four features or "segments" 20 extend radially inwardly by 2mm in this example, which shows a ring internal diameter of 141 mm. This ring serves to separate discs, which are about 3mm larger than the output diameter of the separator. Large diameter features 23 show the position of guide rods 23 which together form a hopper 16 (see figure 4).

When the suction pad 12 pulls the centre of the bottom disc down, the disc forms a bow in the material with the material forming a four-leaf clover shape over the segments and then out through the smaller diameter bottom hole. This deformation helps to break the vacuum between the bottom disc and the next one, leaving the next disc sat on the four segments. Of course more than one suction pad could be used in which case the disc's shape would deform in a different manner according to the number and positions of the suction pads.

A sectional view X-X of the ring of figure 2 is shown in figure 3. Guide rods 23 are located as shown by the large holes and segments 20 are fixed to the separator ring. The separator is smaller than the disc in order to support the stack. The largest aperture possible in the centre of the separator is selected for this so as to cause the minimum interference whilst preventing the stack from dropping straight through.

Figure 4 is a general perspective view of a disc separator and extractor, showing a flighted belt 30 onto which individual discs are released. In the figure, a stack of discs would be supplied pre-lubricated from the coil manufacturer and fed to the hopper 16 or region between the guide rods 23. The lubrication on the discs is a very thin non-wet lube rather than the full amount of wet lube, which is applied by a pair of spray guns after the discs have been individually separated. Full wet lube would make the discs very difficult to separate at speed, even at test rig operating speeds of 500 discs/min.

The spray guns for application of wet lube sit inside the disc handling equipment with a small bulk tank (not shown) mounted close by. The spray guns apply layers to both sides of each disc after the discs have been individually separated and before each disc goes into the cupping press or other subsequent process. This lubrication, which is applied by the spray guns in the disc feeder, is a wet lube. The wet lube is only applied as required by the process and does not require any drying time.

The general view of figure 4 shows one of a pair of belts 30 with spaced flights 32 which run laterally within the extractor and vacuum pad positions 12. The individual discs on the flighted belt could be fed directly to a cupper or closure press, for example, as desired. The disc separation and extractor of the invention avoids the double or multiple feeds, which occurred regularly in disc feeds known in the prior art.

The invention has been described above by way of example only and changes may be made to the separator and, in particular to the equipment to which the individual discs are fed, without departing from the scope of the invention as defined by the claims.

## Claims

1. A method of extracting a single disc (10) from the bottom of a stack of pre-lubricated discs (10), the method comprising:
retaining and sliding a spindle (6) within an extractor shaft (15);
mounting a vacuum pad (12) at the upper end of the spindle;
reciprocating the extractor shaft (15) to cause the vacuum pad (12) to contact the stack of discs supported on a separator ring having an interior surface profile adapted to support the stack of discs, where the interior surface profile of the separator ring includes one or more inwardly protruding segments which define an opening which is smaller than the disc diameter;
switching on a vacuum supply through the vacuum spindle and into the vacuum pad on the up stroke, and thereby gripping the bottom disc of the stack; and
pulling down the gripped disc on the down stroke, and switching off the vacuum supply and releasing the disc, the method **characterised in that** it further comprises:
breaking any attraction between the bottom disc and the adjacent disc by pulling the bottom disc through the opening forming a bow in the bottom disc.

2. A method according to claim 1, in which:
the reciprocating step comprises lifting the extractor shaft (15) up and down through a guide block (18) and moving a plate (4) fixed to the shaft and sprung stops (5) on the plate to a stop position at the end of the up stroke when the stops contact the stack of discs;
the retaining and sliding steps comprise retaining a vacuum spindle within both the plate and the extractor shaft, the spindle having a spring (14) at its lower end; and
allowing the spindle to slide up and down against the bias of the spring;
the step of switching on a vacuum supply comprises switching on the vacuum supply to a chamber in the guide block when a slot (26) in the extractor shaft passes a vacuum supply port (25) thereby switching vacuum through the centre of the vacuum spindle and into the vacuum pad (12) on the up stroke, and gripping the bottom disc (10) of the stack (10); and
the step of switching off the vacuum supply comprises switching off the vacuum supply when the slot in the extractor shaft passes the vacuum supply port on the down stroke.

3. A method according to claim 1 or 2, wherein forming a bow in the bottom disc comprises distorting the disc into a four-leaf clover shape.

4. A method according to any one of the preceding claims and comprising rotating the extractor shaft (15) to assist release of the disc (10') from the segments.

## Patentansprüche

1. Verfahren zum Extrahieren einer einzelnen Scheibe (10) vom Grund eines Stapels von vorgeschmierten Scheiben (10), wobei das Verfahren umfasst:
Rückhalten und Gleiten einer Spindel (6) innerhalb einer Extraktorwelle (15);
Montieren eines Vakuumpads (12) am oberen Ende der Spindel;
Hin- und Herbewegen der Extraktorwelle (15), damit das Vakuumpad (12) den Scheibenstapel kontaktiert, welcher auf einem Trennring getragen wird, welcher ein inneres Flächenprofil aufweist, welches zum Tragen des Scheibenstapels ausgebildet ist, wobei das innere Flächenprofil des Trennrings einen oder mehrere einwärts vorspringende Segmente umfasst, welche eine Öffnung definieren, welche kleiner als der Scheibendurchmesser ist;
Einschalten einer Vakuumversorgung durch die Vakuumspindel und in das Vakuumpad während des Aufwärtshubs, und damit Erfassen der Grundscheibe des Stapels; und
Herunterziehen der festgehaltenen Scheibe während des Abwärtshubs, und Ausschalten der Vakuumversorgung und Freilassen der Scheibe,
wobei das Verfahren **dadurch gekennzeichnet ist, dass** es ferner umfasst:
Unterbrechen jeglicher Anziehung zwischen der Grundscheibe und der angrenzenden Scheibe durch Ziehen der Grundscheibe durch die Öffnung, welche einen Bogen in der Grundscheibe bildet.

2. Verfahren nach Anspruch 1, wobei:
der hin- und hergehende Schritt das Heben und Senken der Extraktorwelle (15) durch einen Führungsblock (18) und das Bewegen einer Platte (4), welche mit der Welle verbunden ist, und von elastischen Stoppern (5) auf der Platte bis zu einer Halteposition am Ende des Aufwärtshubs umfasst, wenn die Stopper den Scheibenstapel kontaktieren;
die Rückhalte- und Gleitschritte das Zurückhalten einer Vakuumspindel innerhalb sowohl der Platte als auch der Extraktorwelle, wobei die Spindel eine Feder (14) an ihrem unteren Ende aufweist; und das Gestatten, dass die Spindel gegen die Vorspannung der Feder auf- und- abwärts gleitet, umfassen,
der Schritt des Einschaltens einer Vakuumversorgung das Einschalten einer Vakuumversorgung zu einer Kammer im Führungsblock umfasst, wenn eine Nut (26) in der Extraktorwelle eine Vakuumversorgungsöffnung (25) passiert, wodurch das Vakuum durch den Mittelpunkt der Vakuumspindel und in das Vakuumpad (12) während des Aufwärtshubs eingeschaltet wird, und das Festhalten der Grundscheibe (10) des Stapels (10); und
der Schritt des Ausschaltens der Vakuumversorgung das Ausschalten der Vakuumversorgung umfasst, wenn die Nut in der Extraktorwelle die Vakuumversorgungsöffnung während des Abwärtshubs passiert.

3. Verfahren nach Anspruch 1 oder 2, wobei das Bilden eines Bogens in der Grundscheibe das Verformen der Scheibe in eine vierblättrige Kleeblattform umfasst.

4. Verfahren nach einem der vorhergehenden Ansprüche, und umfassend das Drehen der Extraktorwelle (15), um das Lösen der Scheibe (10') von den Segmenten zu unterstützen.

## Revendications

1. Procédé pour extraire un disque unique (10) du fond d'une pile de disques pré-lubrifiés (10), le procédé comprenant les étapes suivantes consistant à :
retenir et coulisser un tourillon (6) à l'intérieur d'un arbre extracteur (15) ;
installer une ventouse à vide (12) à l'extrémité supérieure du tourillon,
faire effectuer un mouvement alternatif à l'arbre extracteur (15) afin de provoquer une mise en contact de la ventouse à vide (12) avec la pile de disques supportés sur une bague de séparation ayant un profil de surface intérieur conçu pour supporter la pile de disques, le profil de surface intérieur de la bague de séparation incluant un ou plusieurs segments faisant saillie vers l'intérieur qui définissent un orifice qui est plus petit que le diamètre du disque,
mettre en marche une alimentation en vide au travers du tourillon sous vide et dans la ventouse à vide pendant la course montante, et saisir par ce moyen le disque du fond de la pile, et
tirer vers le bas le disque saisi pendant la course descendante, et couper l'alimentation de vide et dégager le disque.
le procédé étant **caractérisé en ce qu'**il comprend en plus l'étape consistant à :
rompre toute attraction entre le disque du fond et le disque adjacent en tirant le disque du fond par l'orifice formant une courbure dans le disque du fond.

2. Procédé selon la revendication 1, dans lequel :
l'étape de mouvement alternatif comprend le soulèvement et l'abaissement de l'arbre extracteur (15) au travers d'un bloc de guidage (18) et le déplacement d'une plaque (4) fixée à l'arbre et de butées amorties (5) sur la plaque jusqu'à une position de butée à l'extrémité de la course ascendante lorsque les butées entrent en contact avec la pile de disques,
les étapes de retenue et de coulissement comprennent la retenue d'un tourillon à vide à l'intérieur de la plaque et de l'arbre extracteur, le tourillon comportant un ressort (14) à son extrémité inférieure, tout en permettant au tourillon de coulisser verticalement contre la sollicitation du ressort,
l'étape de mise en marche d'une alimentation en vide comprend la mise en marche de l'alimentation en vide jusqu'à une chambre dans le bloc de guidage lorsqu'une fente (26) dans l'arbre extracteur dépasse un port d'alimentation en vide (25), en alimentant par ce moyen un vide au travers du centre du tourillon à vide et dans la ventouse à vide (12) pendant la course montante, et en saisissant ainsi le disque du fond (10) de la pile (10), et
l'étape de coupure d'alimentation en vide comprend la coupure de l'alimentation en vide lorsque la fente dans l'arbre extracteur dépasse le port d'alimentation en vide pendant la course descendante.

3. Procédé selon l'une des revendications 1 ou 2, dans lequel la formation d'une courbure dans le disque du fond comprend la déformation du disque en une forme de trèfle à quatre feuilles.

4. Procédé selon l'une quelconque des revendications précédentes et comprenant la mise en rotation de l'arbre extracteur (15) pour aider le dégagement du disque (10') des segments.
